(19) Europäisches Patentamt
European Patent Office
Office européen des brevets

(11) **EP 2 258 781 A1**

(12) **EUROPEAN PATENT APPLICATION**
published in accordance with Art. 153(4) EPC

(43) Date of publication:
**08.12.2010 Bulletin 2010/49**

(51) Int Cl.:
***C09J 7/02*** *(2006.01)*

(21) Application number: **09722780.5**

(22) Date of filing: **17.03.2009**

(86) International application number:
**PCT/JP2009/001174**

(87) International publication number:
**WO 2009/116267 (24.09.2009 Gazette 2009/39)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **17.03.2008 JP 2008068407**

(71) Applicant: **Lintec Corporation
Itabashi-ku
Tokyo 173-0001 (JP)**

(72) Inventors:
• **HAGIWARA, Shinji
Tokyo 173-0001 (JP)**
• **KANDA, Toshimitsu
Tokyo 173-0001 (JP)**

(74) Representative: **Nicholls, Michael John
J.A. Kemp & Co.
14 South Square
Gray's Inn
London
WC1R 5JJ (GB)**

(54) **ADHESIVE SHEET, AND ADHESIVE SHEET WITH PEEL-OFF SHEET USING THE SAME**

(57)    The present invention disclose a pressure-sensitive adhesive sheet having the adhesive layer on at least one surface of the substrate, **characterized in that** in particular the above adhesive layer has a number of trunk-like grooves which lead to the end of the above sheet, and a number of branch-like grooves with closed terminals which branch from the trunk-like grooves. This structure provides effects in that it can be applied easily and smoothly without retaining air when adhering to an adherend and additionally the appearance of the pressure-sensitive adhesive sheet is not damaged after adhering.

Fig.2

## Description

### FIELD OF THE INVENTION

The present invention relates to a pressure-sensitive adhesive sheet, and more specifically to a pressure-sensitive adhesive sheet available as a large-sized pressure-sensitive adhesive sheet in particular, which has grooves for easily letting out air bubbles to the outside of the sheet that are produced when applied so that it can adhere to an adherend easily, and to a pressure-sensitive adhesive sheet with a release sheet which has convex parts corresponding to the grooves of the pressure-sensitive adhesive sheet on its surface.

### BACKGROUND OF THE INVENTION

In general, a pressure-sensitive adhesive sheet is comprised of a substrate sheet, an adhesive layer formed thereon and a release sheet provided, if necessary, thereon. To use, the above release sheet is peeled off to apply an adhesive layer to an adherend when the release sheet is provided.
However, a pressure-sensitive adhesive sheet having a certain level of large area of use such as a pressure-sensitive adhesive sheet for decoration and a pressure-sensitive adhesive sheet for protecting the surfaces of a metal plate and the like tends to produce air bubbles due to air retention between the adhesive layer and the adherend, which causes the problem where it is difficult to apply the pressure-sensitive adhesive sheet to the adherend smoothly.
In order to solve such problems as described above, so far various attempts have been made wherein grooves having a function as a flow path are provided on the surface of the adhesive layer for letting out air to the outside of the sheet so that air does not stay and air bubbles are not produced when applied. Proposed are, for example, a pressure-sensitive adhesion-processed sheet having an adhesive layer in which a lot of independent small convex parts are provided in a dispersed form (Patent documents 1 and 2), an easily applicable pressure-sensitive adhesive sheet having flow paths for air on an adhesive surface (Patent document 3) and a pressure-sensitive adhesive tape for photoengraving process having an adhesive layer in which grooves capable of forming air flow paths are provided (Patent document 4).

Patent document 1: Japanese Utility Model Registration No. 2503717
Patent document 2: Japanese Utility Model Registration No. 2587198
Patent document 3: Japanese Unexamined Patent Publication Tokkai-sho 63- 223081
Patent document 4: Japanese Unexamined Patent Publication Tokkai-hei 6-248243

However, while these pressure-sensitive adhesive sheets have advantages in that air is removed easily and they can be applied to an adherend easily when applied, there are disadvantages in that adhesive properties with the adherend are insufficient and concavo-convex structures and groove structures stand out on a substrate surface to damage the appearance of the pressure-sensitive adhesive sheets after adhering. Therefore they have not necessarily been sufficiently satisfactory.

### DISCLOSURE OF THE INVENTION

### PROBLEMS TO BE SOLVED BY THE INVENTION

In order to develop a pressure-sensitive adhesive sheet which can easily adhere and be applied to an adherend without retaining air when applied, and where coneavo-convex structures and groove structures do not stand out on a substrate surface so that its appearance is not damaged after adhering, the inventors of the present invention have studied extensively. As a result of that, the present inventors have found that providing a number of trunk-like grooves which lead to the end of the sheet, and a number of branch-like grooves which branch from the trunk-like grooves on the adhesive layer surface of a pressure-sensitive adhesive sheet, produces extremely good results, thereby achieving the present invention.
Namely, the object of the present invention is to provide a pressure-sensitive adhesive sheet which can be applied to an adherend easily and smoothly without retaining air when applied, and also where the appearance is not damaged after adhering.

### MEANS TO SOLVE THE PROBLEMS

Namely, the present invention is a pressure-sensitive adhesive sheet which has an adhesive layer on at least one surface of the substrate, characterized in that the above adhesive layer has a number of trunk-like grooves which lead to the end of the above sheet, and a number of branch-like grooves which branch from the trunk-like grooves with closed terminals; and the present invention is a pressure-sensitive adhesive sheet with a release sheet wherein a release sheet is laminated on the adhesive layer surface of the pressure-sensitive adhesive sheet, characterized in that said release sheet has convex parts corresponding to trunk-like and branch-like grooves formed on the adhesive layer on the surface which contacts with the adhesive layer.
The above trunk-like grooves may cross each other. It is preferable that the trunk-like grooves are linear. From an ease of manufacture standpoint, it is more preferable that the trunk-like grooves are lattice-shaped.
It is preferable that the above trunk-like grooves are $3{\sim}100\ \mu$ m wide and $5{\sim}50\ \mu$ m deep. It is preferable that the above branch-like grooves are $3{\sim}100\ \mu$ m wide and $5{\sim}50\ \mu$ m deep as well. In the present invention it is preferable that the above trunk-like grooves and branch-like grooves are about the same size in width and depth.

EFFECT OF THE INVENTION

The pressure-sensitive adhesive sheet of the present invention has characteristics in that it can easily adhere to an adherend since air is easily let out when applied, and not only adhesive properties with an adherend are excellent but also concavo-convex structures and groove structures do not stand out on the surface of the pressure-sensitive adhesive sheet and its appearance is not damaged after adhering.

BRIEF DESCRIPTION OF THE DRAWINGS

Fig. 1 is a cross-section drawing of the pressure-sensitive adhesive sheet of the present invention.
Fig. 2 is a drawing representing an aspect of the shape of the surface grooves provided on the adhesive layer in the pressure-sensitive adhesive sheet of the present invention.
Fig. 3 is a drawing representing another aspect of the shape of the surface grooves provided on the adhesive layer in the pressure-sensitive adhesive sheet of the present invention.
Fig. 4 is a cross-section drawing of the pressure-sensitive adhesive sheet with a release sheet of the present invention.
Fig. 5 is a drawing representing the shape of the surface grooves provided on the adhesive layer in the pressure-sensitive adhesive sheet of the Comparative Example.
No. 1 is a pressure-sensitive adhesive sheet, No.2 is a substrate, No. 3 is an adhesive layer, No. 4 is trunk-like grooves, No. 5 and 5' are branch-like grooves, No. 6 is a release sheet, No. 7 is a paper substrate, No. 8 is a resin layer, No. 9 is a release agent layer in the drawings.

PREFERRED EMBODIMENT OF THE INVENTION

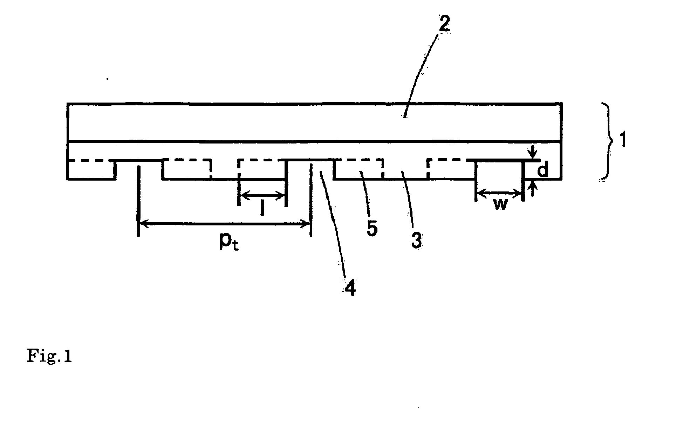

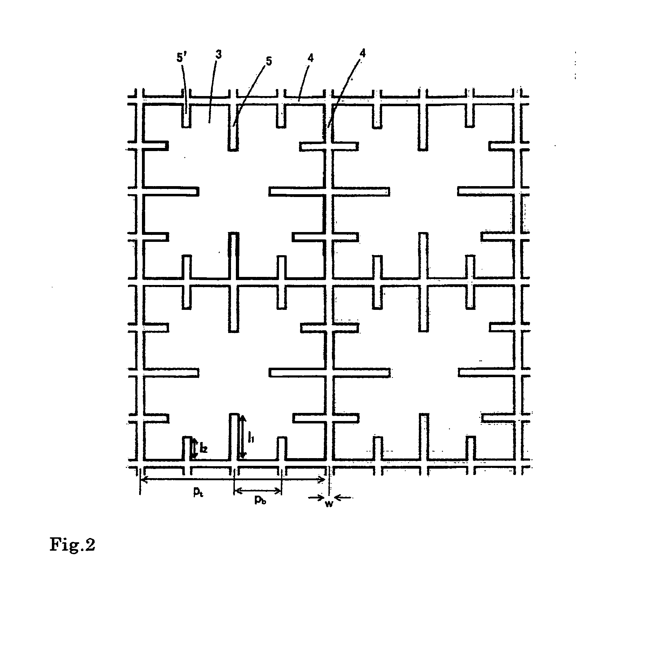

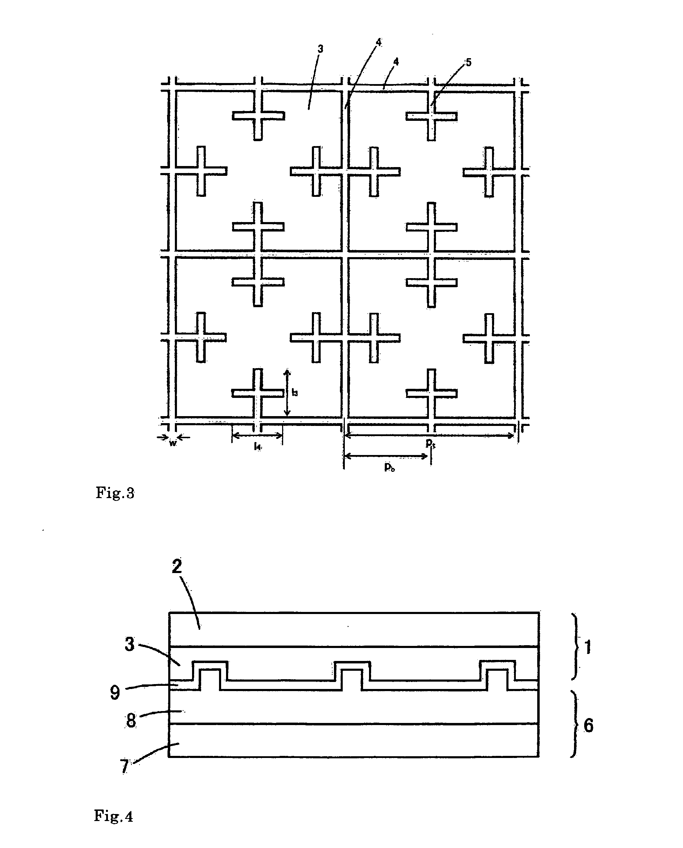

Hereafter, the pressure-sensitive adhesive sheet of the present invention will be described with reference to the drawings. Fig. 1 represents an example of the cross-section of the pressure-sensitive adhesive sheet of the present invention, Figs. 2 and 3 represent an aspect of grooves provided on the adhesive layer surface in the pressure-sensitive adhesive sheet of the present invention, Fig. 4 is a cross-section drawing of the pressure-sensitive adhesive sheet with the release sheet of the present invention. In the figure, No. 1 is the pressure-sensitive adhesive sheet of the present invention, No. 2 is the substrate, No. 3 is the adhesive layer, which may be provided on both surfaces of the substrate No. 2. In the figure, No. 4 is the trunk-like grooves that lead to the end of the pressure-sensitive adhesive sheet, No. 5 and 5' are branch-like grooves with closed terminals. In the figure, No.6 is the release sheet, No. 7 is the paper substrate, No. 8 is the resin layer, No. 9 is the release agent layer.

The material of the substrate 2 used for the present invention is not limited in particular and can be selected from among those known in the art. Examples of the substrate are papers such as woodfree paper, glassine paper and coated paper; plastic sheets such as polyester (for example, polyethylene terephthalate, polyethylene naphthalate), polyorefin (for example, polypropylene, polyethylene), polyvinyl chloride, polyvinylidene chloride, polystyrene, polycarbonate, polyvinyl alcohol, polyurethane and acrylic resin; synthetic paper made of plastic sheet, cellulosic sheets such as cellulose triacetate, cellulose diacetate and cellophane.
The thickness of the substrate may be suitably specified depending on the purpose of use and condition. The substrate is generally 10~300 $\mu$ m thick, and 50~150 $\mu$ m thick is desirable.

When plastic sheets are used as the substrate, concavo-convex treatments by sandblasting and solvent treatment etc., or oxidation treatments such as a corona discharge treatment, an ultraviolet irradiation treatment under the ozone atmosphere, a flame treatment, a chromic acid treatment and a hot-air treatment may suitably be carried out in order to improve adhesive properties with the adhesive layer provided on its surface.

The adhesive agent that forms the adhesive layer No. 3 provided on the surface of the above substrate No. 2 is not limited in particular. Such an acrylic adhesive agent, a rubber adhesive agent and a silicone adhesive agent, which are commonly used as adhesive layers of pressure-sensitive adhesive sheet, can be used.

The thickness of the adhesive layer may be suitably specified depending on the purpose of use and condition. The adhesive layer is generally 7~100 $\mu$ m thick, but 7~50 $\mu$ m thick is more preferable. When it is under 7 $\mu$ m thick, the function to let out air to the grooves does not work sufficiently since the grooves are not deep enough as mentioned below. On the contrary, when it is beyond 100 $\mu$ m thick, it is not economical and more excellent quality can not be obtained just because it thickens increasingly.

The pressure-sensitive adhesive sheet of the present invention has a number of grooves to let out air which is taken in when applied to an adherend to the outside of the sheet. The grooves have trunk-like grooves 4 which lead to the end of the sheet, and branch-like grooves 5 (5') which branch from the trunk-like grooves with closed terminals (see, Figs. 2 and 3).
The cross-sectional shapes of grooves are not limited in particular. Any shape of V, U and trapezium and the like can be used.

The trunk-like grooves that lead to the end of the sheet may not cross each other. However, from the viewpoint in that air is easily let out and flexible cut-out as needed is assured when applied, it is preferable that the trunk-like grooves cross each other. From a suitability of manufacture standpoint, it is preferable that the trunk-like grooves are linear. In particular it is desirable that the trunk-like grooves are lattice-shaped.

The pitch $p_t$ of the trunk-like grooves can be suitably specified. When the pitch is too small, adhesive power deteriorates. Therefore, it is preferable that the pitch is beyond 1,000 $\mu$m.

The branch-like grooves that branch from the trunk-like grooves are closed at their terminals so as not to cross with other branch-like grooves. That is why the pressure-sensitive adhesive sheet can adhere to an adherend smoothly, and furthermore there are effects in that it is difficult to recognize concaveness of the substrate corresponding to branch-like grooves with the naked eye and the appearance is not damaged. The shape of the branch-like grooves is optional as long as they do not cross each other. However, from a suitability of manufacture standpoint, it is preferable that they are linear (See Fig. 2) or cross (See Fig. 3).

The length 1 of the branch-like grooves, depending on the pitch of the trunk-like grooves, is suitably specified within the range that they do not cross each other, and 100-1,000 $\mu$m is preferable. It is preferable that pitch $p_b$ of the branch-like grooves is 100~500 $\mu$m. When the pitch is under 100 $\mu$m, adhesive power deteriorates. When it is beyond 500 $\mu$m, it is difficult to let out air.

It is preferable that the depth d of grooves is each 5~50 $\mu$m independently in both trunk- and branch-like grooves. 10~30 $\mu$m is more preferable.

It is preferable that width W of the opening of the grooves is 3~100 $\mu$m, 10~70 $\mu$m is more preferable. If the depth of the grooves is under 5 $\mu$m, or the width of the opening is under 3 $\mu$m, the function to let out air deteriorates, so it is difficult for air bubbles to disappear. If the depth of grooves is beyond 50 $\mu$m, or the width of the opening is beyond 100 $\mu$m, groove structures stand out on the surface of the pressure-sensitive adhesive sheet after adhering, which damages the appearance. From an ease of manufacture standpoint, it is preferable that the above trunk-like grooves and branch-like grooves are about the same in size of width and depth.

In the pressure-sensitive adhesive sheet of the present invention, the release sheet 6 is laminated on the adhesive layer surface to protect the adhesive layer when not used as shown in Fig. 4. The release sheet consists of the paper substrate 7, the resin layer 8 and the release agent layer 9 provided on the resin layer surface. Convex parts corresponding to grooves provided on the adhesive layer are provided on the resin layer surface facing the adhesive layer.

Thickness of the release sheet is not limited in particular. However, from a viewpoint of handling convenience, it is generally 10~250 $\mu$m, 20~200 $\mu$m is desirable.

The release sheet can be manufactured by methods known in the art. An example of manufacture is as follows; the resin layer 8 wherein a thermoplastic resin such as a polyethylene resin melted by heating is laminated is provided on at least one surface of the paper substrate 7 such as woodfree paper, glassine paper and coated paper, then convex parts corresponding to trunk- and branch-like grooves are provided on the surface of the resin layer 8 by pressing a concavo-convex metal roll (embossment), next, a release agent such as silicone is coated to manufacture.

Examples of manufacturing the pressure-sensitive adhesive sheet with the release sheet of the present invention include one method where an adhesive agent is coated on the surface of a substrate sheet and drying is carried out to form an adhesive layer, then a release sheet having the above convex parts adheres to the adhesive layer and pressurization is carried out, and another example includes a method in that an adhesive agent is coated on a release sheet having the above convex parts and drying is carried out to form an adhesive layer, then a substrate of a pressure-sensitive adhesive sheet is applied to the adhesive layer and pressurization is carried out.

The invention will now be described referring to specific examples, but the invention is not limited to these.

Example 1

A resin layer of 30 $\mu$m thick was provided by coating a polyethylene resin melted by heating on the surface of 110g/m$^2$ by weight of woodfree paper. After pressing a concavo-convex metal roll corresponding to grooves shown in Fig. 2 to the resin layer, a silicone resin was coated to manufacture a release sheet. Sizes of grooves are as follows:

$p_t$ (pitch of trunk-like grooves) :1,200 $\mu$m
$p_b$ (pitch of branch-like grooves) : 300 $\mu$m
$l_1$ (length of branch-like grooves 5) : 400 $\mu$m
$l_2$ (length of branch-like grooves 5') : 200 $\mu$m
w (width of opening of grooves) : 60 $\mu$m
d (depth of grooves) : 15 $\mu$m

The acrylic adhesive agent (PA-T1E: name of commercial product manufactured by Lintec Corporation) was coated on the surface of the release agent layer of the above release sheet, drying was carried out at 100°C and then a polyethylene terephthalate film of 50 $\mu$m thick was applied to manufacture a pressure-sensitive adhesive sheet with a release sheet.

Example 2

A pressure-sensitive adhesive sheet with a release sheet was manufactured in the same manner as Example 1, other than using the metal roll having concavo-convex structures corresponding to grooves shown in Fig. 3.

Sizes of grooves are as follows.

$$p_t: 1,200\,\mu\,m$$

$$p_b: 600\,\mu\,m$$

$$l_3: 400\,\mu\,m$$

$$l_4: 400\,\mu\,m$$

$$w: 60\,\mu\,m$$

$$d: 15\,\mu\,m$$

[Comparative Example 1]

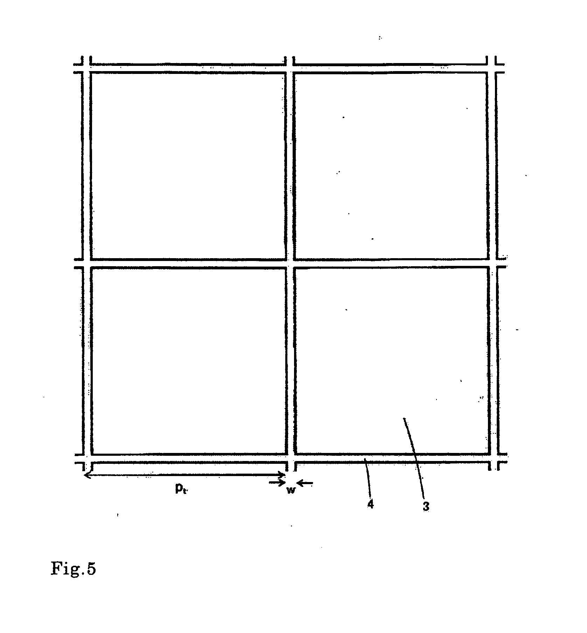

A pressure-sensitive adhesive sheet with a release sheet with no branch-like grooves was manufactured in the same manner as Example 1, other than using the metal roll having concavo-convex structures corresponding to grooves shown in Fig. 5.
Sizes of grooves are as follows.

$$p_t: 1,200\,\mu\,m$$

$$w: 60\,\mu\,m$$

$$d: 15\,\mu\,m$$

The pressure-sensitive adhesive sheet with the release sheet obtained by each Example and Comparative Example was cut into 300mm X 300mm, which were test pieces. The pressure-sensitive adhesive sheet was peeled off from each test piece, and then was applied to the melamine-coated board manually so that 1~10 air bubbles of 15mm in diameter can be made. The test pieces of pressure-sensitive adhesive sheet applied were pressed with a squeegee. It was identified that in case of test pieces of Examples 1 and 2, air bubbles could vanish easily. However, it was identified that in case of the test piece of Comparative Example 1, air bubbles could not vanish.

INDUSTRIAL APPLICABILITY

The pressure-sensitive adhesive sheet of the present invention is so easy to let out air when applied to an adherend that it can be applied easily and smoothly with good adhesive properties. In addition, the pressure-sensitive adhesive sheet of the present invention is suitably used as large-sized surface-protective pressure-sensitive adhesive sheets such as in particular a pressure-sensitive adhesive sheet for identification • decoration, a pressure-sensitive adhesive sheet for coat-masking and metal board since the appearance of pressure-sensitive adhesive sheet is not damaged after adhering.

**Claims**

1. A pressure-sensitive adhesive sheet having the adhesive layer on at least one surface of the substrate, **characterized in that** the above adhesive layer has a number of trunk-like grooves which lead to the end of the above sheet, and a number of branch-like grooves with closed terminals which branch from the trunk-like grooves.

2. The pressure-sensitive adhesive sheet described in Claim 1, wherein the above trunk-like grooves cross each other.

3. The pressure-sensitive adhesive sheet described in Claim 1 or 2, wherein the above trunk-like grooves are linear.

4. The pressure-sensitive adhesive sheet described in Claim 1, wherein the above trunk-like grooves are lattice-shaped.

5. The pressure-sensitive adhesive sheet described in Claim 1, wherein the above trunk-like grooves are 3~100 $\mu$ m wide and 5~50 $\mu$ m deep.

6. The pressure-sensitive adhesive sheet described in of Claim 1, wherein the above branch-like grooves are 3~100 $\mu$ m wide and 5~50 $\mu$ m deep.

7. The pressure-sensitive adhesive sheet described in Claim 1, wherein the above trunk-like grooves have about the same sizes as the above branch-like grooves in width and depth.

8. A pressure-sensitive adhesive sheet with a release sheet wherein the release sheet is laminated on the surface of the above adhesive layer of the adhesive sheet having the adhesive layer on at least one surface of the substrate, **characterized in that** the above adhesive layer has a number of trunk-like grooves which lead to the end of the above sheet and a number of branch-like grooves with closed terminals which branch from the trunk-like grooves and furthermore said release sheet has convex parts corresponding to trunk-like and branch-like grooves formed on the adhesive layer on the surface which contacts with the adhesive layer.

Fig.1

Fig.2

Fig.3

Fig.4

Fig.5

## INTERNATIONAL SEARCH REPORT

| International application No. |
|---|
| PCT/JP2009/001174 |

**A. CLASSIFICATION OF SUBJECT MATTER**
*C09J7/02*(2006.01)i

According to International Patent Classification (IPC) or to both national classification and IPC

**B. FIELDS SEARCHED**

Minimum documentation searched (classification system followed by classification symbols)
C09J1/00-201/10

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2005/100499 A1  (Riken Technos Corp.), 27 October, 2005 (27.10.05), Claims; Figs. 1 to 9 & US 2007/0292650 A1    & EP 1739147 A1 & WO 2005/100498 A1    & CN 1973011 A | 1-8 |
| A | WO 2002/094960 A1  (3M INNOVATIVE PROPERTIES CO.), 28 November, 2002 (28.11.02), Claims; Figs. 1 to 11 & JP 2004-532336 A      & US 2003/0082326 A1 & US 2005/0053747 A1    & EP 1406982 A1 & DE 60228714 D        & AT 407186 T | 1-8 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18 June, 2009 (18.06.09) | 30 June, 2009 (30.06.09) |

| Name and mailing address of the ISA/ Japanese Patent Office | Authorized officer |
|---|---|
| Facsimile No. | Telephone No. |

Form PCT/ISA/210 (second sheet) (April 2007)

| INTERNATIONAL SEARCH REPORT | International application No. |
|---|---|
| | PCT/JP2009/001174 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2005/116157 A1 (Lintec Corp.),<br>08 December, 2005 (08.12.05),<br>Claims; Figs. 1 to 3<br>& JP 2005-336249 A    & US 2007/0224416 A1 | 1-8 |
| A | JP 2007-520623 A (LG Chem, Ltd.),<br>26 July, 2007 (26.07.07),<br>Claims; Figs. 1 to 3<br>& US 2006/0172104 A1    & EP 1841830 A1<br>& WO 2006/080781 A1    & KR 10-2006-0087387 A<br>& CN 1942547 A | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2503717 B
- JP 2587198 B

- JP TOKKAISHO63223081 B
- JP TOKKAIHEI6248243 B